# EUROPEAN PATENT APPLICATION

(11) **EP 2 779 658 A2**
(43) Date of publication of application: **17.09.2014**
(21) Application number: 14158666.9
(22) Date of filing: 10.03.2014
(51) Int. Cl.: H04N 21/218, H04N 21/2225, H04N 21/231, H04N 21/236, H04N 21/2381, H04N 21/2387, H04N 21/239, H04N 21/24

(54) **Segmented content delivery**

(30) Priority: 11.03.2013 US 201313793957
(71) Applicant: Comcast Cable Communications, LLC, Philadelphia, PA 19103 (US)
(72) Inventor: Holden, Dan, Philadelphia, PA Pennsylvania 19103 (US); Mao, Weidong, Philadelphia, PA Pennsylvania 19103 (US); Werner, Anthony, Philadelphia, PA Pennsylvania 19103 (US)
(74) Representative: Jansen, Cornelis Marinus

(57) **Abstract**

Disclosed systems and methods relate to segmented delivery of content. In one aspect, the segmentation process allows discrete segments of content to be moved through a content delivery network for reconstitution at an edge device. In addition, aspects of the disclosure provide for personalized delivery of content (e.g., advertising, etc.) to each end user and for bandwidth optimization by delivering format specific content based on the capability of an end user device. In yet other aspects, the methods and systems disclosed herein may support time-shifted viewing of live programming options and for adaptive bit rate transmission of content to user devices.

## Description

### FIELD

Aspects of the disclosure present methods and systems related to segmented delivery of content through a content delivery network.

### BACKGROUND

In many content delivery networks (e.g., User Datagram Protocol (UDP)-based, etc.), content is delivered to quadrature amplitude modulation (QAM)-based end user devices via a transport stream (e.g., MPEG-2, etc.).

To more efficiently deliver content, conventional networks may employ switched digital video (SDV) techniques to multicast content to edge devices that serve a given service group. In these systems, content is delivered in an all or nothing fashion, where bandwidth limitations at edge devices may initiate a denial of service. Moreover, these systems do not allow for time shifting operations to be executed on content and for personalized content to be delivered to each user. In addition, only specialized client devices are able to support SDV functionalities.

Therefore, better methodologies are needed to more efficiently and effectively deliver content to end users.

### BRIEF SUMMARY

The following presents a simplified summary in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

To overcome limitations in the prior art, and to overcome other limitations that will be apparent upon reading and understanding the present specification, the present disclosure is directed to a method and system for more efficiently delivering programming options to end users by using a segmentation process that allows portions or chunks of content to be moved through a content delivery network before reconstitution at an edge device for delivery to user or client devices.

Aspects of the disclosure address the expansion of linear programing, stored content that can be consumed on-demand (e.g., video-on-demand, etc.), and/or networked digital video recording (DVR) options. The methods and systems discussed herein offer time-shifted and on-demand viewing of content by client devices. In addition, aspects of the disclosure provide for personalized delivery of content (e.g., advertising, etc.). Aspects of the disclosure further allow for bandwidth optimization by delivering format specific content based on the capability of a client device and network resource utilization.

Aspects of the disclosure may be provided in a computer-readable medium having computer-executable instructions to perform one or more of the process steps described herein.

### BRIEF DESCRIPTION OF THE DRAWINGS

A more complete understanding of the present disclosure and the advantages thereof may be acquired by referring to the following description in consideration of the accompanying drawings, in which like reference numbers indicate like features, and wherein:
Figure 1 illustrates an example network in accordance with various aspects of the disclosure.
Figure 2 illustrates an example hardware and software platform on which various elements described herein can be implemented in accordance with various aspects of the disclosure.
Figure 3a shows a flow diagram of a process in accordance with various aspects of the disclosure.
Figure 3b shows a flow diagram of a process in accordance with various aspects of the disclosure.
Figure 3c shows a flow diagram of a process in accordance with various aspects of the disclosure.
Figure 4 shows a flow diagram for delivering content to devices in accordance with various aspects of the disclosure.

### DETAILED DESCRIPTION

In the following description of the various embodiments, reference is made to the accompanying drawings, which form a part hereof, and in which is shown by way of illustration various embodiments in which aspects may be practiced. It is to be understood that other embodiments may be utilized and structural and functional modifications may be made without departing from the scope of the present disclosure.

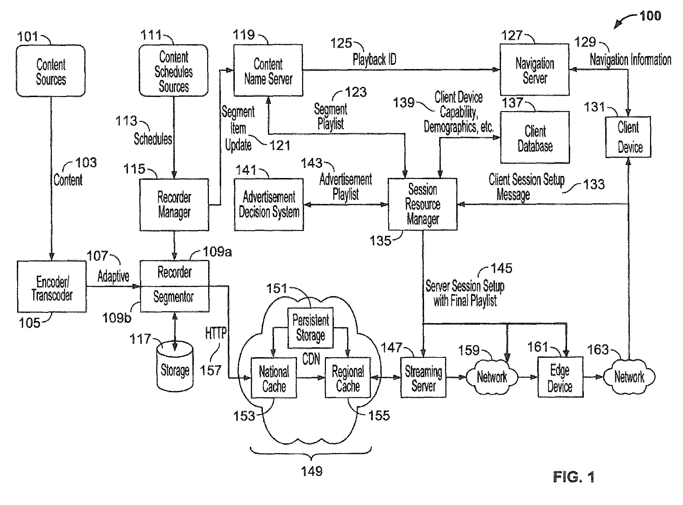

Figure 1 shows an example network 100 for generating and delivering content to end user devices (e.g., a display device, gateway, set top box, etc.) in accordance with various aspects of the disclosure. Within Figure 1, one or more content sources 101 transmit content 103 (e.g., live streams, etc.) to an encoder/transcoder 105. The encoder/transcoder 105 may encode and/or transcode content 103 into multiple codec formats (e.g., Moving Picture Experts Group (MPEG)-2, MPEG-4, High Efficiency Video Coding (HEVC), or any other existing or future codec format) and/or multiple bit rate profiles 107 (e.g., quality levels) before delivering the encoded/transcoded content 107 to a recorder 109a and segmentor 109b. Encoder/transcoder 105 may encode and/or transcode content 103 into any number of codec formats and/or bit rate profiles.

One or more sources 111 for content schedules (e.g., a timing, traffic and/or billing system, etc.) may transmit, to a recorder manager 115, information related to schedules 113 for transmitting content 103. Schedule information 113 received by recorder manager 115 may also include information related to content metadata such as a channel source ID, multicast source and group address, content start time, content end time, content title and description, and advertising break time and length.

Recorder manager 115 may then transmit information regarding schedules 113 and other instructions for recording and segmenting transcoded/encoded content 107 to recorder 109a and segmentor 109b. Recorder manager 115 may select an optimal recorder 109a and segmentor 109b based on the load capacity and/or geo-location of recorder 109a and segmentor 109b and based on content sources 101 (e.g., national and/or local). Recorder 109a and segmentor 109b may use data related to schedules 113 to capture and store (e.g., in data storage 117) transcoded/encoded content 107. In accordance with aspects of the disclosure, caching of small fragments of content 107 (e.g., small object caching) rather than an entire programming option (e.g., live event) may allow for more efficient delivery of content to client devices 131.

As transcoded/encoded content 107 is being recorded, for each adaptive bitrate profile and each codec type, segmentor 109b may parse content 107 into one or more content segments and generate a segment playlist in real time along with an index file. In this regard, the segment playlist may refer to a series of content segments that may be concatenated in a predetermined order to generate a larger unit of content. The index file may include data related to byte ranges / offsets for a given segment of requested content 103. Further, the way in which content 107 is parsed may be based on information stored in schedules 113 aligned with the start and end times of a given unit of content (e.g., a programming option, etc.). In addition or alternatively, the way in which content 107 is parsed may be based on a predetermined, fixed time interval (e.g., a fixed window of content segments lasting two seconds each) and/or fixed boundary points independent of duration.

Content name server 119 may receive messages 121 about content segment updates from recorder manager 115 for each recorded unit of content 107 (e.g., a live programming option). In addition, content name server 119 may generate a logical segment playlist 123 associated with each recorded unit of content 107 (e.g., a live event) using a normal play time (NPT) range for content 107. In this regard, each logical segment playlist 123 may refer to a logical sequence of content segments. This sequence may be concatenated in a predetermined order as indicated by a NPT start and end time to result in a discrete unit of content 103 (e.g., all or a portion of a live event, program, etc.). Further, each content segment may be associated with one of multiple codec types and bitrate profiles.

Content segment updates 121 may be received by content name server 119 as new content segments are created in real-time (e.g., for a live programming event). Therefore, logical segment playlist 123 may represent a continuously growing playlist 123 that continues to grow until a live event ends.

Further, content name server 119 may also transmit a playback ID 125 for each discrete unit of content 103 (e.g., a unit of content represented by a given logical segment playlist 123) to navigation server 127, which may transmit this and other navigation information 129 (e.g., description of a programming option, start time, end time, etc.) for each unit of content 103 to client device 131 (e.g., a gateway, personal computer (PC), smart phone, game console, tablet device, etc.). The term "client" is used herein as merely an example, and device 131 may correspond to any type of user device.

An end user may use client device 131 to navigate content options on demand via navigation information 129 (e.g., playback ID 125, etc.) provided by navigation server 127. In addition, playback ID 125 may be used by client device 131 to transmit a request for content 103 as part of a client session setup message 133 to session resource manager 135.

Once a client session setup message 133 is received, session resource manager 135 may transmit a query to client database 137 to receive information 139 related to capabilities (e.g., configuration, etc.) of the client device 131 requesting content 103. The query may also request information 139 related to demographics (e.g., location, age group, etc.) associated with an end user of client device 131. Among other things, session resource manager 135 may use information 139 to authenticate a content request and confirm entitlement of the requested content 103.

Once a given content request in a client session setup message 133 has been authenticated and once entitlement for the requested content 103 has been confirmed, session resource manager 135 may use the playback ID 125 (e.g., retrieved from client session setup message 133) associated with requested content 103 and information 139 related to capabilities of client device 131 to retrieve a logical segment playlist 123 that specifies playback of content segments in a predetermined codec format and/or with a predetermined bitrate.

When a session associated with a given content request is setup, the existing segment items associated with logical segment playlist 123 from the start of the requested content 103 to the current session setup time may be retrieved from content name server 119 and transmitted to session resource manager 135. Content name server 119 may also continuously update and append logical segment playlist 123 with new segment items related to the requested content 103 as they become available.

Session resource manager 135 may also interface with advertisement decision system 141 to facilitate delivery of personalized advertising to a given client requesting content 103. Session resource manager 135 may transmit, to advertisement decision system 141, (e.g., at session startup time) a request for information related to personalized advertisements targeted to an end user requesting content 103 through client device 131. Based on an analysis of demographics information 139 associated with the end user and other information related to the requested content 103 (e.g., information detailing time, location, and length of an advertisement break within the requested content 103, etc.) retrieved from content name server 119, advertisement decision system 141 may transmit, to session resource manager 135, an advertisement segment playlist 143 referencing one or more segments of advertisements targeted to the end user requesting content 103 through client device 131. When a session associated with the content request is setup, the existing advertisement segment playlist items 143 from the start of the requested content 103 to the current session setup time may be retrieved from advertisement decision system 141 and transmitted to session resource manager 135. Content name server 119 may also continuously update and append advertisement segment playlist 143 with new advertisement segment items related to the requested content 103 as they become available.

Session resource manager 135 may maintain the state of a session and may manage generation of a final playlist with logical segment playlist items 123 and advertisement segment playlist items 143. Session resource manager 135 may also manage NPT start and end times for requested content 103. Once generated, the final playlist may be transmitted as part of a server session setup message 145 to streaming server 147 at the time of session setup. Session resource manager 135 may also transmit in-session updates to streaming server 147 as they become available.

In addition, streaming server 147 (e.g., User Datagram Protocol (UDP)-based, etc.) may interface with a content delivery network (CDN) 149 (e.g., for recorded content), recorder 109a, and segmentor 109b (e.g., for live content) to retrieve each playlist segment from logical segment playlist 123 and advertisement segment playlist 143. Streaming server 147 may also concatenate each retrieved playlist segment and decide on the appropriate bit rate profile to use for delivery to client 131. Streaming server 147 may decide on a given bit rate profile based on factors such as what quality level of content client 131 requests, what quality level of content client 131 supports, and on network congestion levels that may not allow a bit rate profile above a predetermined threshold. CDN 149 may include various storage elements for storing content, including a persistent storage 151, national cache 153 (e.g. for storing content that is nationally applicable), and regional cache 155 (e.g., for storing content that is regionally or locally applicable). Further, CDN 149 may communicate with recorder 109a and segmentor 109b through HTTP link 157. Streaming server 147 may retrieve requested content 103 from recorder 109a, segmentor 109b, and CDN 149 in real-time from the start of a session setup until the end of a programming option (e.g., a live event) or until a user-initiated instruction (e.g., channel tune-away, client device 131 power-down, etc.). Requested content 103 may be streamed to client device 131 via networks 159 and 163 (e.g., a hybrid fiber coaxial network, etc.) in communication with an edge device (e.g., an edge quadrature amplitude modulation (QAM) device) 161.

In accordance with aspects of the disclosure, the system and method discussed herein may support trick mode play (e.g., fast forward, pause, rewind, start over, etc.) of requested content 103. This functionality may be supported by a dynamically and continuously generated index file for a given programming option (e.g., a live event) at recorder 109a and segmentor 109b. Streaming server 147 may retrieve this index file to access a predetermined byte range / offset of key picture frames (e.g., I-frames, IDR frames, etc. depending on codec type) to perform trick mode operations.

Other aspects of the disclosure relate to dynamic bandwidth and resource management (e.g., to handle congested Internet Protocol (IP) network bandwidth and/or Hybrid Fiber Coaxial (HFC), optical, and/or wireless access network bandwidth). This management may occur by detecting the network and/or edge resource congestion from the session resource manager 135 and/or streaming server 147, requesting a lower bitrate profile segment playlist 123 from content name server 119, and playing the lower bitrate profile final playlist from the streaming server 147.

Once a given bitrate profile is chosen, session resource manager 135 may provision the chosen bit rate profile to let other network devices know that the given profile has been chosen. This provisioning may occur at each content fragment boundary as needed wherever new bitrate profiles are chosen by session resource manager 135.

Session resource manager 135 may decide to approve a chosen bitrate profile based on various factors, such as priority of service (e.g., paid content versus free content, live content versus on-demand content, characteristics such as display size of client device 131, etc.). For instance, session resource manager 135 may decide that client devices 131 requesting paid content may receive higher priority than those receiving free content.

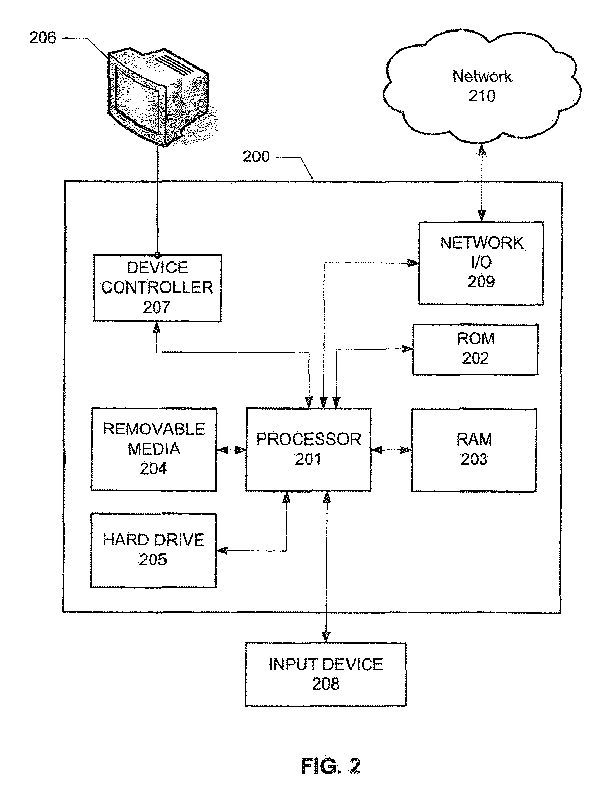

Fig. 2 illustrates general hardware elements that can be used to implement any of the various computing devices discussed herein. The computing device 200 may include one or more processors 201, which may execute instructions of a computer program to perform any of the features described herein. The instructions may be stored in any type of computer-readable medium or memory, to configure the operation of the processor 201. For example, instructions may be stored in a read-only memory (ROM) 202, random access memory (RAM) 203, removable media 204, such as a Universal Serial Bus (USB) drive, compact disk (CD) or digital versatile disk (DVD) drive, and/or floppy disk drive, or any other desired electronic storage medium. Instructions and/or other data may also be stored in an attached (or internal) hard drive and/or data repository 205. The computing device 200 may include one or more output devices, such as a display 206, and may include one or more output device controllers 207, such as a video processor. There may also be one or more user input devices 208, such as a remote control, keyboard, mouse, touch screen, microphone, etc. The computing device 200 may also include one or more network interfaces, such as input/output circuits 209 (e.g., a network card) to communicate with a network 210. The network interface 209 may be a wired interface, wireless interface, or a combination of the two.

One of ordinary skill in the art would recognize that one or more computing devices discussed herein may include some or all of the components discussed in Figure 2, along with additional components.

As mentioned above, this disclosure identifies problems associated with efficiently delivering content to end users. The present disclosure is directed to a method and system for more efficiently delivering programming options to end users by using a segmentation process that allows chunks of content to be moved through a content delivery network before reconstitution at an edge device for delivery to client devices.

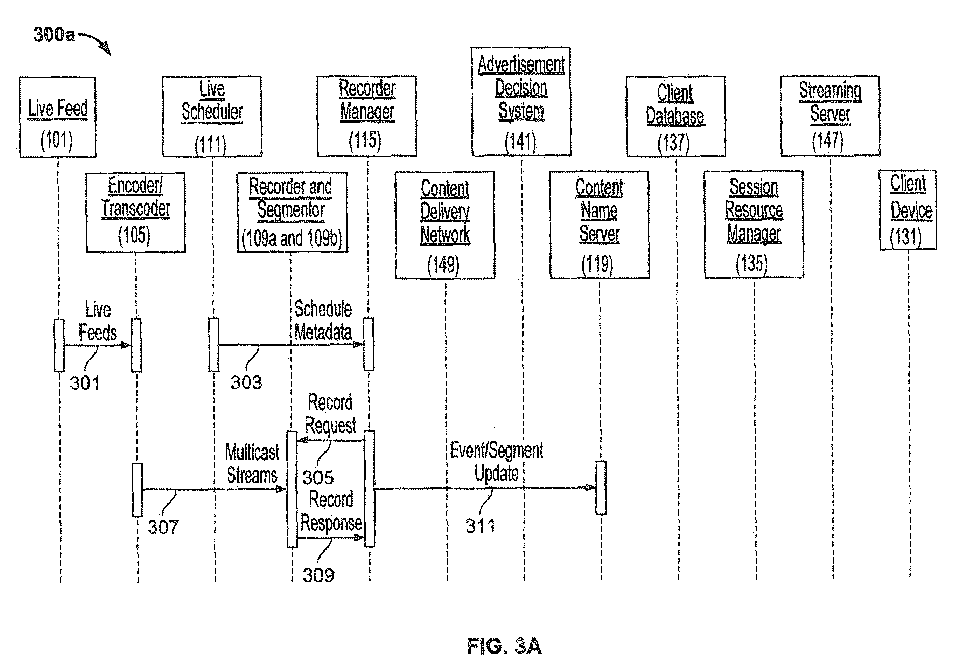

Figure 3a shows a first flow diagram for content delivery in accordance with various aspects of the disclosure. The process 300a may start out at step 301 where content 103 may be transmitted from content sources (e.g., live feeds) 101 to encoder/transcoder 105. Moreover, information 113 related to scheduling of content 103 (e.g., scheduling metadata) may be transmitted from content scheduler 111 to a recorder manager 115 in step 303.

Next, the process may move to step 305 where a request to record content 107 may be transmitted from recorder manager 115 to recorder 109a and segmentor 109b. When this request is received, encoded/transcoded content 107 may be transmitted to recorder 109a and segmentor 109b in step 307 and a response indicating that recording and segmenting of content 107 is taking place may be transmitted from recorder 109a to recorder manager 115 in step 309. Additionally, updates to content segments 121 may be transmitted from recorder manager 115 to content name server 119 in step 311.

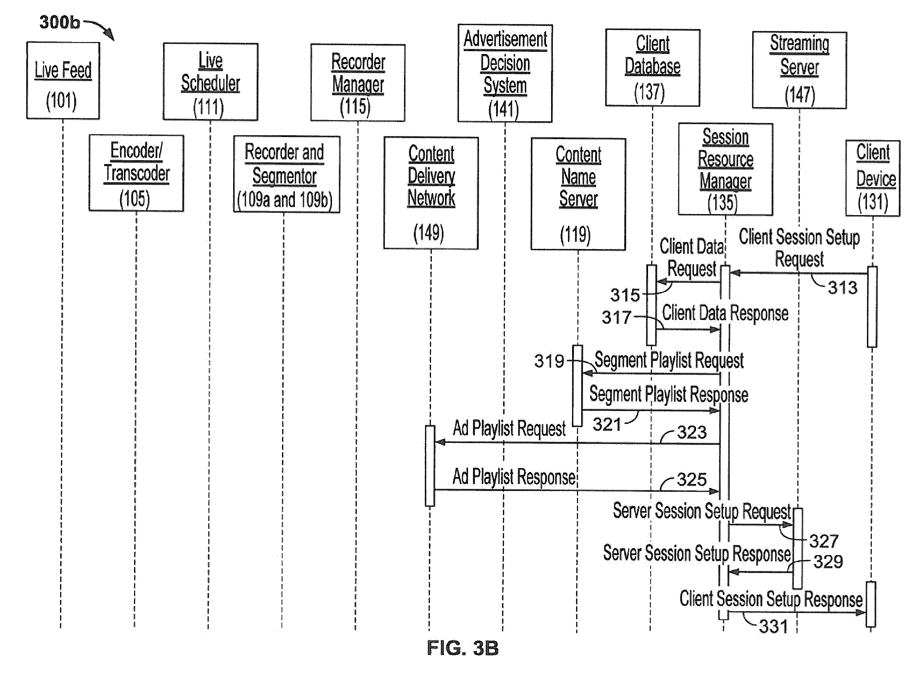

Figure 3b shows a second flow diagram for content delivery in accordance with various aspects of the disclosure. The process 300b may start out at step 313 where client device 131 may transmit a client session setup request 133 to session resource manager 135. When client device 131 transmits a client session setup request 133 to session resource manager 135, session resource manager 135 may transmit a request for client data 139 from client database 137 in step 315. Client database 137 may transmit this information to session resource manager 135 as a response in step 317. Based on the information in the client session setup request 133, session resource manager 135 may also transmit a request for a content segment playlist 123 to content name server 119 in step 319, and content name server 119 may transmit a response that includes content segment playlist 123 in step 321.

The process may then move to step 323 where session resource manager 135 may transmit a request for an advertisement segment playlist 143 to advertisement decision system 141. Upon receiving this request, based on an analysis of client data 139, advertisement decision system 141 may transmit an advertisement segment playlist 143 to session resource manager 135 in step 325.

Session resource manager 135 may then transmit a server session setup request 145 with a final playlist to streaming server 147 in step 327 and streaming server 147 may reply with a response (e.g., acknowledging receipt of server session setup request 145) in step 329. The process may then move to step 331 where session resource manager 135 may transmit a client session setup response (e.g., acknowledging receipt of client session setup request 133) to client device 131.

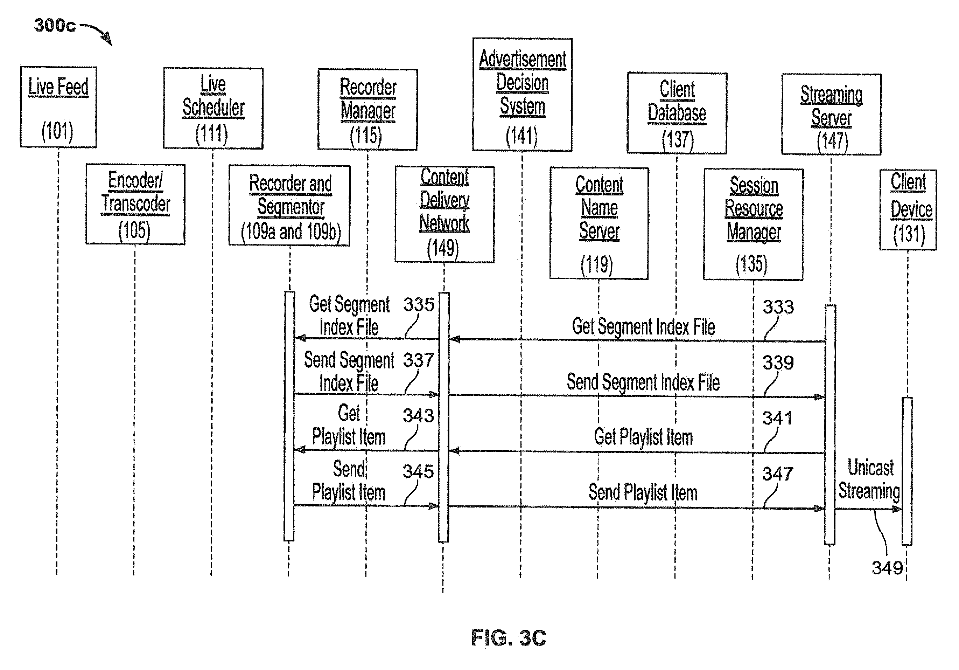

Figure 3c shows a third flow diagram for content delivery in accordance with various aspects of the disclosure. The process 300c may start out at step 333 where streaming server 147 may transmit, to content delivery network 149, a request for a segment index file corresponding to the requested content 103. CDN 149 may then forward this request to recorder 109a and segmentor 109b in step 335. Once this request is received, in step 337, recorder 109a and segmentor 109b may transmit the appropriate segment index file to CDN 149, which may forward this index file to streaming server 149 in step 339.

The process may then move to step 341 where streaming server 147 may transmit, to CDN 149, a request for a playlist item, and CDN 149 may forward this request to recorder 109a and segmentor 109b in step 343. Once this request is received, in step 345, recorder 109a and segmentor 109b may transmit the appropriate playlist item to CDN 149, which may forward this playlist item to streaming server 147 in step 347. Streaming server 147 may then concatenate all received playlist items and transmit the playlist items to client 131 for unicast streaming in step 349.

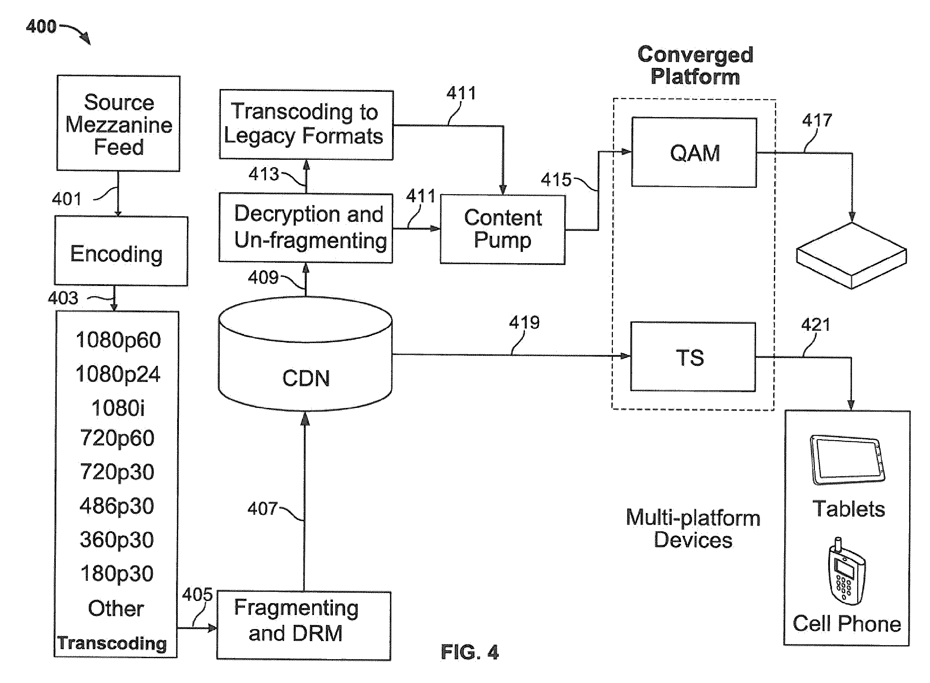

Figure 4 shows a flow diagram 400 for delivering content to end user devices (e.g., client devices 131) in accordance with various aspects of the disclosure. In Figure 4, a source mezzanine feed may transmit high quality, high bit rate content (e.g., 50 or 100 Megabit source content, etc.) to an encoder (e.g., encoder 105) in step 401. Encoder 105 may encode the high quality, high bit rate content from the source mezzanine feed at multiple bit rate profiles to enable adaptive bit rate streaming. Then in step 403, the encoded content may be transcoded to one or more resolutions (e.g., 1080i, 720p60, etc.) for delivery to one or more different types of client devices 131.

The transcoded/encoded content 107 may be fragmented (e.g., by segmentor 109b) into discrete units (e.g., as fixed or variable time slices) and secured with a digital rights management (DRM) scheme in step 405. The process may then move to step 407 where content 107 may be transmitted onto a CDN 149 for distribution to one or more client devices 131. Content 107 on CDN 149 may support delivery of content to multiple types of client devices 131, including legacy (e.g., QAM-based, etc.) and IP devices. In this way, multiple sets of network devices (e.g., encoders, transcoders, storage, etc.) may not have to be maintained by a content supplier for each of multiple types of devices 131, thereby reducing cost associated with content delivery. In addition, content 107 stored on CDN 149 may be transcoded into a predetermined format (e.g., H.264) that may deliver higher coding efficiencies than other formats (e.g., MPEG-2).

For content delivery to a predetermined set of client devices 131 (e.g., QAM-based clients, etc.) the process may then move to step 409 where content 107 stored on CDN 149 may be unfragmented (and decrypted) and either directly stored on a content pump (e.g., streaming server 147, video on demand (VOD) pump, etc.) in step 411 or transcoded from one or more formats (e.g., H.264, HEVC, etc.) to a legacy format (e.g., MPEG-2, etc.) in step 413 before storage on a content pump in step 411 to support playback of content 107 by legacy client devices 131. In accordance with aspects of the disclosure, the functionalities associated with defragmenting, transcoding, and streaming may be performed by a gateway device (e.g., home gateway, mobile communications gateway, etc.). In this regard, a mobile communications gateway may process content from a content provider for distribution to various mobile devices.

Once content 107 is stored on a content pump in step 411 or on CDN 149 in step 407, content 107 may be transmitted to a converged platform. The converged platform may include a pathway for delivery of content from the content pump to a QAM device in step 415 and to QAM-based clients in step 417 or from CDN 149 to a termination system (TS) (e.g., cable modem termination system) in step 419 and to IP-based client devices 131 (e.g., tablets, cell phones, etc.) in step 421. In this regard, QAM-based clients 131 may include those that support content delivery in formats such as MPEG-2/Arc Consistency-3 (AC-3)/enhanced binary exchange format (eBIF) and H.264/Advanced Audio Coding (AAC)/eBIF. In addition, IP-based client devices 131 may include those that support content delivery in formats such as adaptive bit rate (ABR) H.264/AAC/ Hypertext Markup Language (HTML) 5, and smooth/HTTP Live Streaming (HLS)/Zeri/Dash.

One of ordinary skill in the art would recognize that the methods shown in Figures 3a-3c and 4 may be performed piecemeal and not in their entirety. In addition, the methods/systems shown in Figures 3a-3c and 4 are merely example embodiments of aspects of the disclosure.

Although the subject matter disclosed herein has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method comprising:
receiving, at one or more devices, a session setup message referencing a plurality of content segments;
determining, at the one or more devices, one of a plurality of bit rates for transmitting the plurality of content segments;
requesting, at the one or more devices, the plurality of content segments at the one of the plurality of bit rates from a content delivery network;
receiving, at the one or more devices, the plurality of content segments at the one of the plurality of bit rates from the content delivery network;
concatenating, at the one or more devices, the plurality of content segments; and
transmitting, at the one or more devices, the concatenated segments at the one of the plurality of bit rates.

2. The method of claim 1, further comprising: detecting, at the one or more devices, network congestion in the content delivery network.

3. The method of claim 2, further comprising: in response to the detecting, determining, at the one or more devices, a lower bit rate for transmitting the concatenated segments.

4. The method of claim 3, further comprising: transmitting, at the one or more devices, the concatenated segments at the lower bit rate to a user device.

5. The method of any of claims 1-4, further comprising: receiving, at the one or more devices, the plurality of content segments that includes a plurality of personalized advertisement segments at the one of the plurality of bit rates from the content delivery network.

6. The method of any of claims 1-5, further comprising: transmitting, at the one or more devices, the concatenated segments at the one of the plurality of bit rates to a user device in at least one of High Efficiency Video Coding (HEVC), Moving Picture Experts Group (MPEG)-2, and H.264 formats.

7. The method of any of claims 1-6, further comprising: receiving, at the one or more devices, a request to perform a trick mode operation on the transmitted segments.

8. The method of claim 7, further comprising: accessing, at the one or more devices, an index file that includes byte ranges and offsets for each of a plurality of picture frames within each of the plurality of content segments to perform the trick mode operation.

9. The method of any of claims 1-8, further comprising: receiving, at the one or more devices, a user-initiated instruction from a user device.

10. The method of any of claims 1-9, further comprising: receiving, at the one or more devices, additional content segments from the content delivery network as the additional content segments become available.

11. An apparatus comprising:
a processor; and
a memory storing computer-readable instructions that, when executed by the processor, cause the processor to perform:
receiving a message with a playback ID corresponding to a content item;
transmitting a request to a database for information regarding a device requesting the content item;
receiving the information from the database;
based on the received information, authenticating the device and determining an entitlement of the device to the content item; and
using the information and the playback ID, requesting a content segment playlist for transmitting of the content item in a predetermined format and with a predetermined bit rate.

12. The apparatus of claim 11, wherein the computer-readable instructions, when executed by the processor, further cause the processor to perform:
requesting an advertisement segment playlist in the predetermined format and at the predetermined bit rate for playback of one or more advertisements during the transmission of the content item.

13. The apparatus of claim 12, wherein the computer-readable instructions, when executed by the processor, further cause the processor to perform:
receiving the advertisement segment playlist.

14. The apparatus of claim 13, wherein the computer-readable instructions, when executed by the processor, further cause the processor to perform:
generating a final segment playlist that includes the content segment playlist and the advertisement segment playlist.

15. A non-transitory computer-readable storage medium having computer-executable program instructions stored thereon that when executed by a processor, cause the processor to perform steps comprising:
receiving a first message with a playback ID corresponding to a content item;
transmitting a request to a database for information regarding a device requesting the content item;
receiving the information from the database; and
based on the received information, authenticating the device and determining an entitlement of the device to the content item.
